# EUROPEAN PATENT APPLICATION

(11) **EP 4 749 553 A1**
(43) Date of publication of application: **27.05.2026**
(21) Application number: 25215445.5
(22) Date of filing: 13.11.2025
(51) Int. Cl.: G06Q 20/18, G07F 19/00

(54) **WEATHER EVENT OCCURENCE**

(30) Priority: 22.11.2024 US 202418956652
(71) Applicant: Cardtronics USA, Inc., Atlanta, GA 30308-1007 (US)
(72) Inventor: McGRATH, Shannon Louise, Dundee, DD3 9QF (GB); KENNETH, Scott, Dundee, DD3 9QF (GB); HARRISON, Greg Robert, Angus, DD2 5QD (GB); FYFE, Conor Michael, Carnoustie, DD7 7NX (GB); SCOTT, Lloyd, Dundee, DD2 1RW (GB)
(74) Representative: Secerna LLP

(57) **Abstract**

A method and a Self-Service Terminal are disclosed. The method comprises responsive to a first output of a first weather event detection component of an SST, detecting, by the SST, a possible weather event in an environment local to the SST; responsive to at least one second output of at least one second weather event detection component of the SST, verifying, by the SST, said possible weather event; and responsive to said verifying, determining, by the SST, that the possible weather event is occurring in the environment local to the SST.

## Description

### Field of the Invention

The present invention relates to a method for determining occurrence of a weather event in an environment local to a Self-Service Terminal, SST, and a Self-Service Terminal that can determine occurrence of a weather event in an environment local to the SST. In particular, but not exclusively, the present invention relates to a methodology by which a possible weather event, for example a possible rain event, can be detected in an environment local to a SST, with the possible weather event then being verified to determine that the possible weather event is occurring in the environment local to the SST.

### Background

Self-Service Terminals (SSTs) are known. SSTs are used in a range of industries including retail and banking. For example, one type of SSTs are Point of Sale (POS) Terminals, such as check out terminals, which are often used in a retail environment where they may be operated by a sales clerk or a customer to facilitate transactions. Another type of SST is an Automated Teller Machine (ATM). An ATM is an electronic banking outlet that provides a range of services to a customer and allows customers/users to complete basic transactions without the aid of a bank representative or teller. Anyone with a credit card or debit card can access transaction services at most ATMs. ATMs provide both basic cash-dispensing services as well as advanced functions, including, for example: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset for conducting conversations with a teller, a coin dispenser for distributing different denominations of coins, an ID scanner for authenticating the customer, a signature pad and the like.

ATMs (or other SSTs) are designed to be versatile so they can be used in different environments, including indoors (for example inside bank branches) and outdoors (for example hole-in-the-wall or freestanding ATMs). This means that ATMs (in particular ATMs used outdoors) may be exposed to a variety of different weather conditions or weather events which may cause problems or faults during use or operation of the ATM. ATMs may therefore require information about their local environment in order to operate accurately and/or efficiently. This may include data on the local temperature data, rain, sunlight, or the like.

For example, rain can be problematic in a number of ways for ATMs, such as for touchscreens that may be affected by rain and become unresponsive/faulty. Another way rain may be problematic is for certain devices/components of the ATM that collect sensor data during operation as where those sensors are exposed to the environment, rain may create noise that provides false readings on the sensor. Some examples of this include shutter sensors that may mistake rain for a user's hand and card reader sensors that may mistake rain for an external skimmer attached to the card reader, both of which may generate false tampering alerts. Current workarounds may mitigate these false alerts by reducing sensor sensitivity or switching off the sensor when sensor noise is high (as a result of rain). However, this is undesirable as it may not be a reliable and/or accurate way of detecting rain or other weather events.

### Summary

It is an aim of the present invention to at least partly mitigate one or more of the above-mentioned problems.

It is an aim of the present invention to help determine occurrence of a weather event (optionally a rain event) in an environment local to a Self-Service Terminal.

It is an aim of the present invention to more accurately and/or reliably determine occurrence of a weather event (optionally a rain event) in an environment local to a Self-Service Terminal.

It is an aim of the present invention to reduce false alerts in the determination of occurrence of a weather event (optionally a rain event) in an environment local to a Self-Service Terminal.

It is an aim of the present invention to change operational settings associated with hardware components of a Self-Service Terminal in response to determining occurrence of a weather event.

According to a first aspect of the present invention there is provided a computer-implemented method for determining occurrence of a weather event in an environment local to a Self-Service Terminal, SST, comprising the steps of: responsive to a first output of a first weather event detection component of a Self-Service Terminal, SST, detecting, by the SST, a possible weather event in an environment local to the SST; responsive to at least one second output of at least one second weather event detection component of the SST, verifying, by the SST, said possible weather event; and responsive to said verifying, determining, by the SST, that the possible weather event is occurring in the environment local to the SST.

Aptly, wherein the possible weather event is a possible rain event, the method further comprising: responsive to the first output that is output from a first rain event detection component of the SST, detecting, by the SST, a possible rain event in the environment local to the SST; responsive to the at least one second output that is output from at least one second rain event detection component of the SST, verifying, by the SST, said possible rain event; and responsive to said verifying, determining, by the SST, that the possible rain event is occurring in the environment local to the SST.

Aptly, the method further comprising: the first rain event detection component comprises a rain drop sensor disposed on a fascia of the SST; the method further comprising detecting the possible rain event by determining that an analogue output value output from the rain drop sensor is greater than a first predetermined threshold value.

Aptly, the method further comprising: classifying a severity of the possible rain event based on the analogue output value.

Aptly, the method further comprising the rain drop sensor comprises a support for a first electrode array and a further electrode array that each include electrode fingers disposed on a surface of the support, the electrode fingers of the first electrode array being interdigitated with the electrode fingers of the further electrode array; the method further comprising determining that the analogue output value is greater than the first predetermined threshold value comprises determining that a current flowing between the first and further electrode arrays is equal to or greater than a predetermined threshold current.

Aptly, the method further comprising the at least one second rain event detection component comprises an API module configured to communicate with a web-based weather application; the method further comprising: transmitting, by the API module, a geolocation of the SST to the web-based weather application; receiving, by the API module, rain data comprising data indicative of a first likelihood of rain value from the web-based weather application; and outputting, by the API module, the first likelihood of rain value as said at least one second output.

Aptly, the method further comprising verifying the possible rain event by determining that the first likelihood of rain value is greater than a second predetermined threshold value.

Aptly, the method further comprising the rain data further comprises data indicative of a rainfall volume value; the method further comprising: classifying a severity of the possible rain event based on the rainfall volume value.

Aptly, the method further comprising the at least one second rain event detection component comprises at least one pre-trained AI module configured to detect the possible rain event; the method further comprising;: providing sound data captured by at least one microphone of the SST as an input into the at least one pre-trained AI module; and outputting, by the pre-trained AI module, at least one respective second likelihood of rain value as said at least one second output.

Aptly, the method further comprising verifying the possible rain event by determining that at least one of the at least one respective second likelihood of rain value is greater than at least one respective third predetermined threshold value.

Aptly, the method further comprising classifying a severity of the possible rain event based on a greatest of the at least one respective second likelihood of rain value.

Aptly, the method further comprising responsive to said determining, changing, by the SST, at least one operational setting associated with at least one hardware component of the SST.

Aptly, the method further comprising changing at least one operational setting of a card skimmer detector component located within the SST.

Aptly, the method further comprising disabling the card skimmer detector component.

Aptly, the method further comprising: transmitting, by the SST, an indication that the possible weather event is occurring in the environment to at least one further SST located within a predetermined distance of the SST.

Aptly, the method further comprising: the second weather event detection component is a communication module configured to communicate with at least one further SST located within a predetermined distance of the SST, the method further comprising: receiving, by the SST, an indication that the possible weather event is occurring in the environment from the at least one further SST; and verifying said possible weather event based on said indication.

Aptly, the method further comprising prior to said detecting and said verifying, inputting the first output and the at least one second output into a central processing unit; and responsive to said determining, outputting an indication that the weather event is occurring in the environment from the central processing unit.

According to a second aspect of the present invention there is provided a Self-Service Terminal, SST, comprising at least one processor configured to detect a possible weather event in an environment local to the SST based on a first output of a first weather event detection component of the SST; verify said possible weather event based on at least one second output of at least one second weather event detection component of the SST; and determine that the possible weather event is occurring in the environment local to the SST when the possible weather event is verified.

Aptly, wherein the SST is an Automated Teller Machine, ATM.

According to a third aspect of the present invention there is provided a computer program comprising instructions which, when executed by a computing device, cause the computing device to carry out the steps of the method defined by the first aspect of the present invention.

Certain embodiments of the present invention provide a method to help determine occurrence of a weather event (optionally a rain event) in an environment local to a Self-Service Terminal.

Certain embodiments of the present invention provide a first weather event detection component that may detect a possible weather event and at least one second weather event detection component that may verify the possible weather event to determine that the possible weather event is occurring in the environment local to a SST. This two-step detection and verification enables a more accurate and/or reliable determination of the occurrence of a weather event. Aptly, the possible weather event is a possible rain event.

Certain embodiments of the present invention provide the classification of a severity of a possible weather event (optionally, a possible rain event) to allow for increased accuracy and/or reliability determination of the occurrence of a weather event.

Certain embodiments of the present invention provide multiple different ways/mechanisms to verify the possible weather event, enabling a more accurate and/or reliable determination of the occurrence of a weather event by using verification from any one of the multiple different verification mechanisms.

Certain embodiments of the present invention provide a rain drop sensor as a first weather event detection component that may detect the presence of rain by measuring the current between electrode arrays to more accurately and/or reliably detect the occurrence of rain.

Certain embodiments of the present invention provide an API module configured to communicate with a web-based weather application as a second rain event detection component to verify the possible weather event by obtaining a likelihood of rain and/or rainfall volume at a location of the SST.

Certain embodiments of the present invention provide a pre-trained AI module configured to analyse sound data captured by a microphone to verify the possible rain event by obtaining at least one likelihood of rain.

Certain embodiments of the present invention enable multiple SSTs located within a predetermined distance of each other to communicate between each other and transmit an indication that a possible weather event is occurring in the environment, which enables verification of the possible weather event to provide increased confidence (accuracy and/or reliable) determination of a weather event. Alternatively, this may allow the same accuracy of determination with less hardware required.

Certain embodiments of the present invention allow ATMs (or other SSTs) in the same or similar geographical regions to communicate with each other and compare this data. For example, two ATMs on the same street may collate similar data on possible weather events and could compare this data in order to validate results. Each ATM may have its own sensor data but this data may not only be stored locally on the ATM it is collected on, but also shared with other ATMs in close proximity. So while only one ATM in a town may have the latest technologies/sensors, such as rain sensors and thermometers (or the like), all other ATMs in the town could benefit from this if the ATMs were connected through the cloud and capable of sharing this information. Sharing this data could also be used to detect faults or bugs so if two ATMs in close proximity both had rain sensors but are both reporting very different results then this could highlight either a hardware malfunction or a bug in the software or firmware. The data connectivity may also be used to consolidate sensor data and results.

Certain embodiments of the present invention provide a methodology of combining outputs from different methods of detecting rain (or other weather events) to determine the probability of rain at an SST at a certain time. Each detecting method may have its own weaknesses and therefore, to achieve a more accurate result, a method of combining data may be useful. A Centralised Rain Detection System may communicate with ATM components to confirm whether it is raining or not. Devices may use this information to operate accurately with reduced false alerts and maintaining high security. The solution combines multiple rain detection methods and each method returns a percentage value of whether it believes it is currently raining at the ATM or not. The system may then combine these values to determine an overall result. The methods of detection may be whatever hardware and software is available on the given ATM. Alternatively, ATMs may be retrofitted with the necessary hardware/software. By way of example only, a rain sensor (such as a rain drop sensor) has the potential to be incorrect, therefore different mechanisms may verify its results. If the rain sensor tells a rain detection component that it is raining, it may be verified by a weather API and/or rain detection AI. If the rain sensor detects rain, and either the weather API or rain detection AI confirms it, the rain detection component may say that it is raining.

Certain embodiments of the present invention reduce the number of false alerts, which may save money and increase customer satisfaction.

Certain embodiments of the present invention increase the level of security on multiple security devices, as security devices may predict if it's raining with confidence and adjust their settings appropriately.

Certain embodiments of the present invention improve the functionality of current devices. Currently the touchscreen determines if it is raining by detecting multiple taps on the screen. Instead, certain embodiments of the present invention may be used to determine if it's raining, and the touchscreen settings may be adjusted appropriately.

Certain embodiments of the present invention reduce future development time. Multiple devices in the ATM have their own individual way of detecting rain through their sensors. These devices are not always confident that it is raining. Future devices may not have to focus as much development time on detecting rain.

Certain embodiments of the present invention provide the possibility to sell information collected by the present methodology to weather broadcasts or the like.

Certain embodiments of the present invention provide additional logging to help solve problems for each device effected by rain.

Certain embodiments of the present invention provide increased accuracy compared to a standalone solution.

Certain embodiments of the present invention provide a moisture sensor (e.g. a rain drop sensor) built into a fascia of an ATM (or other SST) in an appropriate location where it is exposed to the elements and unlikely to be covered by an ATM user. This should be in a location which is not sheltered by other components and therefore more exposed to the environment and should also not be placed somewhere a user may accidentally cover it when using the ATM. There may be an array of sensors in several locations so that if only one sensor is reporting a high moisture value, then this could be marked as a sensor malfunction and there would be a minimum number of high values returned in order to report rain. The sensor data is then analysed to determine whether the returned value is of a high enough level to signify that it is raining or not. This is particularly useful for light rain/drizzle/mist where there may be limited audio picked up by a sound detection method or for capacitive sensing methods as the rain is too light to be detected.

Certain embodiments of the present invention provide a method of detecting rain using audio collected from a microphone on an ATM (or other SST) fascia and a pre-trained AI sound recognition program to determine the percentage chance of whether it is raining at the ATM or not. Microphones in an ATM may collect audio to determine if it is raining near the ATM.

In the training phase, a dataset is gathered from the ATM microphones to collect audio files for different weather environments. Once a large dataset is retrieved the data may be labelled. Next, the features of the audio file may be extracted and fed to a machine learning algorithm such as a binary classification neural network. The neural network may learn the features of each audio file and recognise patterns to reach a prediction for the different environments. Once the model is trained, the microphone data from ATM in the field may be passed to the model. The model may return a percentage prediction for the current weather environment. If the model predicts it is raining other technology devices within the ATM may be notified and tuned appropriately.

Certain embodiments of the present invention provide AI software employing advanced machine learning techniques to classify audio files, distinguishing between different types of sound such as rain and street noise. By way of example only, YouTube videos containing rain and street noise may be converted into .wav files to create a dataset. The dataset may be split into training and testing data, with data preprocessing involving cropping the .wav files into 10 second clips. The Librosa library may be used to process the audio files and extract essential features. These features may then be fed into a neural network model built using TensorFlow and Keras to recognise patterns in the audio data. The parameters of the model may then be tuned based on accuracy of the predictions made on the test dataset.

Certain embodiments of the present invention may use a large and diverse dataset for training and validation testing. The training library may consider different types of rain such as drizzle, light rain, mist, heavy rain, monsoon and also be exposed to other elements such as snow, ice and wind.

Certain embodiments of the present invention provide AI sound recognition with audio data from an ATM microphone. Technicians have mentioned being able to hear a problem before they see it. AI may be used to detect ATM problems. AI and Audio may also be used to detect drill/file attacks.

### Brief Description of the Drawings

Embodiments of the present invention will now be described hereinafter, by way of example only, with reference to the accompanying drawings in which:
Figure 1 illustrates a computing system;
Figure 2 illustrates a rain drop sensor; and
Figure 3 illustrates a flowchart describing the steps taken to determine the occurrence of a weather event in an environment local to a Self-Service Terminal.

In the drawings like reference numerals refer to like parts.

### Detailed Description

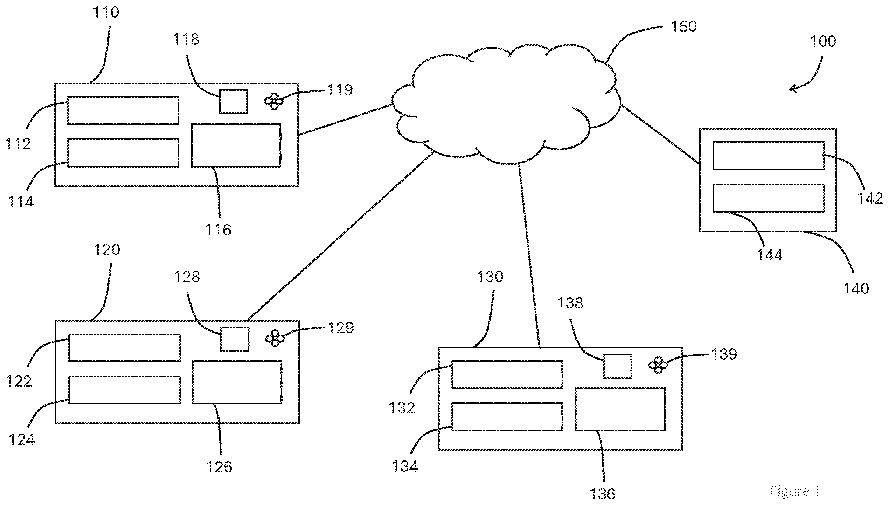

Figure 1 illustrates a computing system 100. In the computing system 100 there is a first Automated Teller Machine (ATM) 110, a second Automated Teller Machine (ATM) 120, a third Automated Teller Machine (ATM) 130, and a server 140. Each ATM is an example of a Self-Service Terminal (SST), and may instead be a Point of Sale (POS) Terminal or the like. Each ATM may or may not be an Interactive Teller Machine (ITM). It will be appreciated that each of the ATMs are located remotely from each other and may be within a predetermined distance of each other (for example, within 10 km radius of the first ATM). It will also be appreciated that whilst three ATMs are illustrated in Figure 1, any number of ATMs (or POS terminals or other SSTs) could be included in the computing system 100.

The first ATM 110 includes one or more processors 112, at least one memory 114 and a display 116. The memory is a non-transitory computer-readable storage medium. The memory 114 stores executable software that is executable by the processors 112 of the ATM. The display 116 displays a graphical user interface for enabling the user to enter details and select options during transactions at the ATM. The first ATM also includes a rain drop sensor 118 (an example of a moisture sensor) and at least one microphone 119. The rain drop sensor 118 is located on a fascia of the ATM (i.e. a case or cover or the like) and detects possible rain events as described herein. The at least one microphone 119 captures sound data from the vicinity of the ATM.

The second ATM 120 includes one or more processors 122, at least one memory 124 and a display 126. The memory is a non-transitory computer-readable storage medium. The memory 124 stores executable software that is executable by the processors 122 of the ATM. The display 126 displays a graphical user interface for enabling the user to enter details and select options during transactions at the ATM. The second ATM also includes a rain drop sensor 128 (an example of a moisture sensor) and at least one microphone 129. The rain drop sensor 128 is located on a fascia of the ATM (i.e. a case or cover or the like) and detects possible rain events as described herein. The at least one microphone 129 captures sound data from the vicinity of the ATM.

The third ATM 130 includes one or more processors 132, at least one memory 134 and a display 136. The memory is a non-transitory computer-readable storage medium. The memory 134 stores executable software that is executable by the processors 132 of the ATM. The display 136 displays a graphical user interface for enabling the user to enter details and select options during transactions at the ATM. The third ATM also includes a rain drop sensor 138 (an example of a moisture sensor) and at least one microphone 139. The rain drop sensor 138 is located on a fascia of the ATM (i.e. a case or cover or the like) and detects possible rain events as described herein. The at least one microphone 139 captures sound data from the vicinity of the ATM.

The executable software of each ATM, when executed by the respective processor(s), may cause each ATM to carry out the methodology described herein. Each ATM may also include a communication module/interface (not shown) for communicating with the other ATMs and/or with the server 140. Each ATM may also include an API module (not shown) configured to communicate with a web-based weather application (for example, hosted on the server 140) using the application program interface (API) of the web-based weather application. Each ATM may also include a pre-trained AI module (not shown) configured to detect a possible weather event. The ATM functionality is configurable to suit the context and environments in which it is situated by including any combination of conventional ATM components in the ATM. Each ATM may for example include any combination of an encrypted PIN pad (not shown), a note dispenser (not shown), a receipt printer (not shown), a card slot (not shown) for insertion of a user's bank card, a contactless reader (not shown), a camera (not shown), a barcode reader (not shown), a cash recycler (not shown), a card printer (not shown), a touchscreen (not shown), a coin dispenser (not shown), a rolled coin dispenser (not shown), speakers (not shown), mixed media deposit (not shown), biometric user authentication (not shown), cheque deposit module (not shown) or the like as will be appreciated by a person of skill in the art. When any of the ATMs is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The pre-trained AI module may be a machine learning model trained to detect a possible weather event, using standard techniques known to the person skilled in the art. By way of example only, the machine learning model may be an artificial neural network, such as a binary classification neural network built using TensorFlow and Keras, with a first layer, a first dropout layer, a second layer, a second dropout layer, and an output layer, with the following characteristics for each layer:
- First layer: 128 neurons, rectified linear activation function (ReLU) activation, input shape of 13 (corresponding to the number of input features),
- Dropout layer: 30% dropout rate,
- Second layer: 64 neurons, rectified linear activation function (ReLU) activation,
- Dropout layer: 30% dropout rate, and
- Output layer: 1 neuron, sigmoid activation for binary classification.

Also, by way of example only, the training process may proceed according to the following process. The training process may first involve collecting training data, for example existing video clips of different weather conditions, such as rain and ambient street noise, may be used or alternatively the ATM microphone may be used to collect sound data with rain and no rain. It will be appreciated that the data may be collected from ATMs in the field or in a controlled environment such as a rain chamber. As the data is gathered the data may be split into the relative class with labels (e.g. rain and no rain) and split into training data and testing data, e.g. 80% training and 20% testing. All data may be split up into audio clips of a consistent time, for example 10 seconds, to create a consistency in data being fed to the model.

An audio analysis package, for example the Librosa library, may then be used to extract features from the audio clips, for example Mel Frequency Cepstral Coefficients (MFCC) features. It will be appreciated that MFCCs are a way to convert complex audio signals into a form that is simpler for analysis, by analysing each frame of the audio to determine how much energy is present at different frequencies and then mapping the frequences onto the Mel scale. The average of the MFCCs may then be calculated for each audio clip. The number of MFCCs used may correspond to the number of input features used in the first layer of the model, e.g. an input shape of 13.

The training data may be fed to the model for learning. The model may predict the classification of the testing data, and the model parameters may be fine-tuned based on the model's ability to correctly classify the testing data. That is to say, the neural network may learn the features of each audio file and recognise patterns to reach a prediction for the different environments. The model may then be validated by feeding in new data for a different dataset that it has not seen before (e.g. audio from a different ATM location that was not used for training), i.e. the testing data. If the model can correctly classify the data, then this is a sign that the model has not overfitted to the training data.

For each audio clip of the specified time length (e.g. 10 seconds) the model may return a prediction confidence from 0% to 100% for each class used in training. For example, for two classes of rain and no rain, the prediction confidences may be 10% street noise (no rain) and 90% rain. It will be appreciated that multiple classes may be used to predict the severity of rain, for example heavy rain, moderate/medium rain, light rain, no rain, and additional non-rain classes may also be added, e.g. "Street Noise", "Lobby Noise" or the like. This requires training data to be collected for each of the classes. With multiple classes the model may return a distribution of prediction confidences across the different classes.

The server 140 is a remote server (i.e. remote from each ATM) that may be associated with or operated by a third-party weather provider or the like. The server 140 also includes one or more processors 142 and at least one memory 144. The memory 144 is also a non-transitory computer readable storage medium. The memory 144 stores executable software that is executable by the processors of the server 140. The server 140 hosts a web-based weather application, i.e. a service for obtaining weather data that may be accessed over the internet by making suitable API calls. That is to say, messages may be sent to the server from a client (e.g. an API module of an ATM) using the application programming interface (API) of the web-based weather application with a request for weather data at a certain geolocation, and the server may then return weather data providing details of current or predicted weather events, for example rain data including a likelihood of rain value and a rainfall volume value. It will be appreciated that a geolocation is the geographic position of a device determined, for example, by an IP address of the device or the like.

The first ATM 110, second ATM 120, third ATM 130 and server 140 communicate via a network 150. The network 150 may be wired, wireless or a combination of wired and wireless. For example, the network may be the internet or may be a peer-to-peer direct connection between ATMs or may be a secured private network.

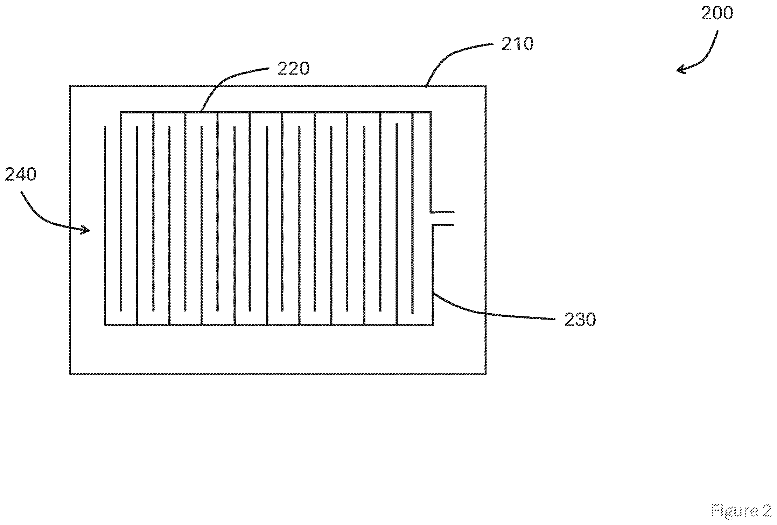

Figure 2 illustrates a rain drop sensor 200, which may be the rain drop sensor on any of the ATMs of Figure 1. The rain drop sensor 200 is an example of a moisture sensor, and may be a commercial sensor such as a YL-83 sensor with LM393 control chip or the like, as known by the person skilled in the art. The rain drop sensor 200 may be retrofitted to existing terminals (ATMs, SSTs or the like) or may be integrated into new terminals. The rain drop sensor 200 includes a support 210 suitable for locating/securing/mounting the rain drop sensor 200 on a fascia of a SST (e.g. ATM). For example, the support 210 may be the substrate of a printed circuit board (PCB) or the like. The support 210 is for a first electrode array 220 and a further electrode array 230 that each include electrode fingers disposed on a surface of the support 210. Each electrode array is a conductive track, for example metallic traces deposited on the surface of the support 210. It will be appreciated that each electrode array defines a respective conductive path with electrode fingers of the first electrode array 220 interdigitated with electrode fingers of the further electrode array 230 at an interdigitated region 240. That is to say, in the interdigitated region 240 a plurality of elongate conductive tracks of the respective electrode arrays are interlaced with each other to provide a large overlap area between the first and further electrode arrays. The electrode arrays are initially electrically isolated from each other, i.e. there is a large electrical resistance between the first and further electrode array. Aptly, the initial electrical resistance is greater than 1 MOhm, 5 MOhm, or 10 MOhm or the like, such that a small or negligible electrical current flows between the first and further electrode array upon application of a voltage between the respective electrode arrays.

It will be appreciated that upon rain drops hitting the rain drop sensor 200 and landing in the interdigitated region 240, the electrical resistance between the electrode fingers of the first and further electrode array may be reduced such that the current between the first and further electrode arrays may increase. That is to say, rain drops located in the interdigitated region 240 allow electrical conduction between the electrode fingers of the respective electrode arrays. Rain drops may therefore be detected by monitoring the current flowing between the first and further electrode arrays with application of a set voltage and comparing it to a predetermined threshold current. A possible rain event may then be detected by determining that the current is equal to or greater than the predetermined threshold current. A severity of the possible rain event (i.e. the intensity of rain) may also be classified based on the current. That is to say, a greater current flows between the first and further electrode arrays for more rain drops accumulated on the rain drop sensor and the possible rain event may be classified as, for example, heavy rain, medium rain or light rain based on the magnitude of the current flowing between the first and further electrode arrays.

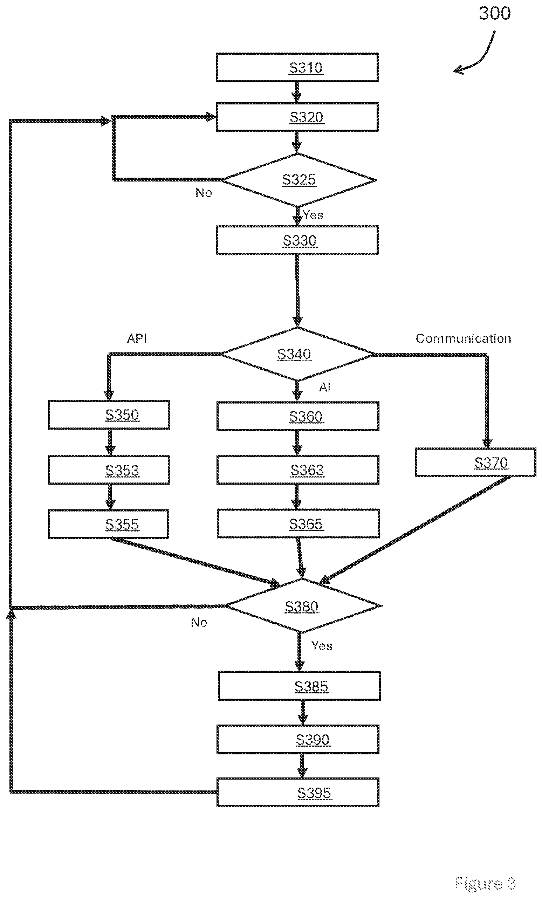

Figure 3 illustrates a method 300 for determining occurrence of a weather event in an environment local to a Self-Service Terminal (SST). It will be appreciated that the method 300 can be implemented with the computing system 100 of Figure 1, i.e. the method 300 may be implemented as a computer-implemented method, by using a computing program that when executed by a computing device causes the computing device to carry out the steps of the method 300.

First, in an initial step S310, a computing system having at least one SST (such as an ATM) is provided, with at least one of the SSTs having a first weather event detection component and at least one second weather event detection component. For example, the first weather event detection component may be a first rain event detection component, such as a rain drop sensor disposed on a fascia of the SST (as described with reference to Figure 2). For example, one or more of the at least one second weather event detection component may be a rain event detection component, such as any combination of an API module configured to communicate with a web-based weather application, or at least one pre-trained AI module configured to detect a possible rain event, or may be a communication module configured to communicate with at least one further SST located within a predetermined distance of the SST. It will be appreciated that according to certain embodiments, different weather event detection components may be used as the first weather event detection component and at least one second weather event detection component.

Next, in a first output step S320, the first weather event detection component of the SST provides a first output. It will be appreciated that the first output may be continuously or periodically provided by the first weather event detection component. For example, in the case of a rain drop sensor as the first rain event detection component (an example of the first weather event detection component), the first output step S320 proceeds by monitoring an analogue output value (an example of the first output) output from the rain drop sensor while applying a voltage between first and further electrode arrays. It will be appreciated that (as described with reference to Figure 2) monitoring the analogue output value includes monitoring a current flowing between a first and further electrode array.

Then, in a detection step S325, the SST uses the first output to detect a possible weather event in an environment local to the SST. Aptly, the first output is input into a central processing unit (e.g. a processor of the SST) to carry out the detection step S325. It will be appreciated that the environment local to the SST includes the immediate vicinity of the SST to determine if the possible weather event may impact operation of the SST itself. It will also be appreciated that the possible weather event refers to an event detected by the first weather event detection component, prior to verification by at least one second weather event detection component that the possible weather event is actually occurring (i.e. that the possible weather event is a weather event) later in the method 300. According to certain embodiments, the detection step S325 uses a comparison of the first output to a first predetermined threshold the first output to determine the detection of the possible weather event. If the detection step S325 results in no detection of a possible weather event, then the method 300 returns to the first output step S320 and the first weather event detection component continues to provide a first output. It will be appreciated that the detection step S325 may run simultaneously to the first output step S320 or they may run sequentially. If the detection step S325 results in detection of a possible weather event, then the method 300 instead proceeds to an optional classification step S330.

For example, for a first rain event detection component, the SST uses the first output to detect a possible rain event in an environment local to the SST. In the case of the rain drop sensor, the possible rain event is detected by comparing the analogue output value to a first predetermined threshold value (for example, 450 units). If the analogue output value is less than the first predetermined threshold value, then no possible rain event has been detected and the method 300 returns to the first output step S320. However, a possible rain event is detected if the analogue output value is determined to be greater than the first predetermined threshold value. It will be appreciated that detection of the possible rain event may involve determining if the current is greater to or equal than a predetermined threshold current.

In the optional classification step S330, subsequent to detection of the possible weather event in the detection step S325, the severity of the possible weather event is classified. For example, for a possible rain event, the severity of the possible rain event may be classified, for example into heavy rain, medium rain or light rain. In the case of the rain drop sensor, the classification may take place based on the analogue output value, as the current and therefore the analogue output value increases with increased rain drops accumulating on the rain drop sensor. It will be appreciated that the classification step S330 may use a plurality of predetermined classification threshold values to achieve classification of the possible rain event into different severity categories.

Next, in a second output step S340, the method 300 proceeds depending on which second weather event detection components are present on the SST, with each of the at least one second weather event detection component providing a respective second output to enable verification of the possible weather event. It will be appreciated that the second output step S340 may run simultaneously with the first output step S320 or may only run after detection of a possible weather event in the detection step S325. When multiple second weather event detection components are present, then the method 300 may proceed to provide a respective second output from each of the second weather event detection components, either simultaneously or sequentially.

In a first option, with an API module configured to communicate with a web-based weather application as one of the second weather event detection components, the method proceeds to an API output step S350. In the API output step S350, the API module obtains and transmits a geolocation of the SST to the web-based weather application. This may involve sending an API request to the web-based weather application. It will be appreciated that the geolocation is data indicating the location of the SST, for example hardcoded into a memory of the SST or obtained by an IP address of the SST. The web-based weather application then retrieves weather data for the geolocation and transmits the weather data back to the SST, where the weather data is received by the API module. It will be appreciated that the weather data may include rain data including data of a first likelihood of rain value and/or data indicative of a rainfall volume value. That is to say, the weather data may indicate a percentage change of rain at the geolocation and an expected volume of rainfall. The first likelihood of rain value is then output as an API second output for verification of the possible weather event (aptly, the possible rain event).

After output of the API second output in the API output step S350, the method 300 proceeds to an API comparison step S353, where the first likelihood of rain value is compared to a second predetermined threshold value. If the first likelihood of rain value is greater than the second predetermined threshold value, then the API comparison step S353 provides an API verification of the possible rain event. Then, in an optional API classification step S355, the severity of the possible weather event is classified based on the rainfall volume value, for example into heavy rain, medium rain or light rain based on a plurality of predetermined API classification threshold values.

In a second option, with a pre-trained AI module configured to detect a possible rain event as one of the second weather event detection components, the method proceeds to an AI output step S360. In the AI output step S360, at least one microphone of the SST captures sound data in the vicinity of the SST, with the sound data provided as input into a pre-trained AI module. The training process for the AI module is described with reference to Figure 1. The pre-trained AI module then outputs at least one respective second likelihood of rain value as an AI second output. It will be appreciated that the at least one second likelihood of rain value outputted from the pre-trained AI module is the prediction confidence of each class that the AI module has been trained on. For example, for two classes of rain and no rain, the second likelihood of rain value may be 90% rain (i.e. 10% no rain), whereas for multiple classes corresponding to different severity of rain then multiple second likelihood of rain values may be output corresponding to the prediction confidence for each class (e.g. 20% heavy rain, 40% medium rain, 30% light rain, 10% no rain).

After output of the AI second output in the AI output step S360, the method 300 proceeds to an AI comparison step S363 where each of the at least one respective second likelihood of rain value (corresponding to each of the classes used in training the AI module) is compared to a respective third predetermined threshold value. It will be appreciated that a different third predetermined threshold value may be defined for each class. If at least one of the at least one respective second likelihood of rain value is greater than at least one respective third predetermined threshold value, then the AI comparison step S363 provides an AI verification of the possible rain event. For example, the third predetermined threshold value could be set to 30% for all the different classes of rain severity, and if any of the second likelihood of rain values for the different classes of rain severity exceed 30% then the AI comparison step S363 provides an AI verification. Alternatively, a different way of providing an AI verification could be used, such as adding the prediction confidences from different severity of rain classes to provide an overall second likelihood of rain value that may be compared to a third predetermined threshold value. Then, in an optional AI classification step S365, the severity of the possible weather event may be classified based on a greatest of the at least one respective second likelihood of rain value, for example into heavy rain, medium rain or light rain based on which severity of rain class has the greatest prediction confidence.

In a third option, with a communication module configured to communicate with at least one further SST located within a predetermined distance of the SST as one of the second weather event detection components, the method proceeds to a communication output step S370. In the communication output step S370, the SST receives an indication that the possible weather event is occurring in the environment from at least one further SST located within a predetermined distance of the SST and outputs the indication as a communication second output. The predetermined distance may be, for example, a geographical area, such as a street, area of a city (e.g. borough), city or the like, or may be a geographical radius from the SST, such as 5km, 10km, 20km, 50 km or the like. The predetermined distance may be set in advance of execution of the method 300 and optionally may be changed from time to time, for example by changing a setting on the SST itself or remotely. The at least one further SST located within the predetermined distance of the SST may include all SSTs within the predetermined distance or may include a subset of those SSTs, for example only the SSTs operated by a certain bank or SST operator or only the SSTs with certain sensors installed, such a rain drop sensor or the like. It will be appreciated that communication between SSTs may be over the internet or over a secured private network, and/or may be directly between SSTs. The at least one further SST may determine that the possible weather event is occurring in the environment by executing the method 300 itself (i.e. at each of the at least one further SST), for example responsive to outputs from weather event detection components, such as a rain drop sensor and the like, located at each of the at least one further SST. The indication that the possible weather event is occurring in the environment may be represented in data transmitted from the at least one further SST. For example, each SST, or each of the subset of the SSTs, located within the predetermined distance may send data to the SST indicating if the method 300 executed by the respective SST detects the possible weather event as occurring in the environment. It will be appreciated that data may only be sent from an SST if the possible weather event is detected as occurring, or alternatively data may be sent indicating that either the possible weather event is or is not occurring in the environment of the respective SST. If the SST receives an indication that the possible weather event is occurring in the environment from any one of the at least one further SST then the SST provides a communication verification of the possible rain event. It will be appreciated that alternative ways of providing a communication verification may be used, such as requiring a certain proportion (e.g. 30%) of the at least one further SST to indicate that the possible weather event is occurring.

After receiving at least one second output from at least one second weather event detection component, the method 300 proceeds to a verification step S380, where the possible weather event (e.g. a possible rain event) is verified based on at least one respective verification provided responsive to each at least one second output. Aptly, the at least one second output is input into a central processing unit to carry out the verification. For example, the at least one second output may include any of the API second output, the AI second output and/or the communication second output, with each respectively providing the API verification, AI verification and communication verification. Alternatively or additionally, the at least one second output may also include at least one other second output from second weather event detection components other than those described above installed at the SST. Verification of the possible weather event means that the possible weather event (as detected by the first weather event detection component) is confirmed by the at least one second output of the at least one second weather event detection component. That is to say, the verification step S380 provides a double check that the possible weather even is occurring. The possible weather event may be verified if any one of the individual verifications (based on the respective second output) indicate that the possible weather event is occurring. For example, if the API verification (based on the API second output) indicates that the possible weather event is occurring, whereas the AI verification and communication verification indicate that the possible weather event is not occurring, then the possible weather event would be verified. Alternatively, a different method of verifying the possible weather event based on the individual verifications (responsive to each second output) may be used, such as weighting the multiple individual respective verifications by different factors to arrive at an overall verification of the possible weather event. Further alternatively, verification may require that all detection methods indicate that it is raining. It will be appreciated that if the verification step S380 indicates that the possible weather event is not verified (for example, none of the individual verifications based on the respective at least one second output indicate that the possible weather event is occurring), then the method 300 returns to the first output step S320.

If the verification step S380 indicates that the possible weather event is verified (for example, at least one of the individual verifications based on the respective at least one second output indicate that the possible weather event is occurring), then the method 300 proceeds to a determination step S385. In the determination step S385, based on verifying the possible weather event in the verification step S380, the SST determines that the possible weather event is occurring in the environment local to the SST (i.e. the SST determines that the possible weather event is a weather event). Aptly, the determination step S385 determines that the possible rain event is occurring in the environment local to the SST. It will be appreciated that the determination step S385 may involve outputting an indication from the central processing unit that the weather event is occurring in the environment. It will also be appreciated that any of the second rain detection components may be used as the first detection component (to initially detect a possibility of a rain event) and then the rain drop sensor or any one of the other second rain detection components may be used to verify this result.

Next, in an optional transmitting step S390, the SST transmits an indication that the possible weather event is occurring in the environment to at least one further SST located within a predetermined distance of the SST. It will be appreciated that transmitting the indication may be via the communication module and may be over the internet or over a secured private network, and/or may be directly between SSTs. As for the communication output step S370, the predetermined distance may be, for example, a geographical area, such as a street, area of a city (e.g. borough), city or the like, or may be a geographical radius from the SST, such as 5km, 10km, 20km, 50 km or the like. The predetermined distance may be set in advance of execution of the method 300 and optionally may be changed from time to time, for example by changing a setting on the SST itself or remotely. The at least one further SST located within the predetermined distance of the SST may include all SSTs within the predetermined distance or may include a subset of those SSTs, for example only the SSTs operated by a certain bank or SST operator or only the SSTs with certain sensors installed, such a rain drop sensor or the like. Via the transmitting step S390, the at least one further SST therefore receives the indication that the possible weather event is occurring in the environment and the at least one further SST are each able to itself carry out the communication output step S370 in the method 300 executed at the respective SST. That is to say, by transmitting the indication that the possible weather event is occurring in the environment from the SST, further SSTs within a predetermined distance are able to use the indication to verify their own detection of a possible weather event.

Finally, in an optional change step S395, based on determining that the possible weather event is occurring in the environment local to the SST, the SST changes at least one operational setting associated with at least one hardware component of the SST. The change step S395 allows operational settings of hardware components to be adjusted or altered to optimise operation of the hardware components given different weather conditions or weather events (as detected and verified by the method 300). For example, at least one operational setting of a card skimmer detector component located within the SST may be changed, which may include disabling the card skimmer detector component. As a further example, settings of a touch screen may be changed, for example adjusting the sensitivity or responsiveness of the touch screen. Following the optional change step S395, the method 300 returns to the first output step S320, where the first weather event detection component may again monitor for the possible weather event. That is to say, by iterating through the method 300, the SST may determine (by detecting and verifying) when the weather event is no longer occurring.

In summary, the method 300 enables determination of occurrence of a weather event in an environment local to a SST. A first output of a first weather event detection component enables detection of a possible weather event in the environment local to the SST, for example by monitoring the analogue output value of a rain drop sensor and comparing the analogue output value to a first predetermined threshold. Following detection of the possible weather event, at least one second output of at least one second weather event detection component enables verification (i.e. double checking or confirming) of the possible weather event. For example, these second outputs may include a first likelihood of rain value from an API module (based on data received from a web-based weather application), at least one respective second likelihood of rain value from a pre-trained AI module (based on capturing sound data by at least one microphone), and/or an indication received from at least one further SST. It will be appreciated that alternatively or additionally other second weather event detection components may be used. Based on the at least one second output, for example by comparing each second output to a respective predetermined threshold, a respective individual verification may be made using each of the at least one second weather event detection component. Based on the respective individual verifications, an overall verification of the possible weather event may be made, for example if the possible weather event is verified by at least one respective individual verification. Alternatively, the respective individual verifications may be weighted to arrive at an overall verification. Following the verification of the possible weather event (by arriving at an overall verification), the SST determines that the possible weather event is occurring in the environment local to the SST. Aptly, this determination allows for at least one operational setting associated with at least one hardware component to be changed (e.g. disabling a card skimmer detector component). It will be appreciated that the method 300 may also include classification of the severity of the possible weather event based on the respective first and at least one second output. Whilst determination of a rain event has been described above, it will be appreciated that the methodology may be applied to other weather events. For example, a temperature sensor, UV sensor and/or API module or the like may be used to detect, verify and determine that a severe heat event is occurring. In another example, a wind speed sensor, pre-trained AI module and API module or the like may be used to detect, verify and determine that a severe wind event is occurring.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for determining occurrence of a weather event in an environment local to a Self-Service Terminal (SST), comprising the steps of:
responsive to a first output of a first weather event detection component of an SST, detecting, by the SST, a possible weather event in an environment local to the SST;
responsive to at least one second output of at least one second weather event detection component of the SST, verifying, by the SST, said possible weather event; and
responsive to said verifying, determining, by the SST, that the possible weather event is occurring in the environment local to the SST.

2. The method as claimed in claim 1, wherein the possible weather event is a possible rain event, the method comprising the steps of:
responsive to the first output that is output from a first rain event detection component of the SST, detecting, by the SST, a possible rain event in the environment local to the SST;
responsive to the at least one second output that is output from at least one second rain event detection component of the SST, verifying, by the SST, said possible rain event; and
responsive to said verifying, determining, by the SST, that the possible rain event is occurring in the environment local to the SST.

3. The method as claimed in claim 2, wherein the first rain event detection component comprises a rain drop sensor disposed on a fascia of the SST; and wherein the method further comprising detecting the possible rain event by determining that an analogue output value output from the rain drop sensor is greater than a first predetermined threshold value; and optionally
further comprising classifying a severity of the possible rain event based on the analogue output value.

4. The method as claimed in claim 3, wherein the rain drop sensor comprises a support for a first electrode array and a further electrode array that each include electrode fingers disposed on a surface of the support, the electrode fingers of the first electrode array being interdigitated with the electrode fingers of the further electrode array; the method further comprising:
determining that the analogue output value is greater than the first predetermined threshold value comprises determining that a current flowing between the first and further electrode arrays is equal to or greater than a predetermined threshold current.

5. The method as claimed in any one of claims 2 to 4, wherein the at least one second rain event detection component comprises an API module configured to communicate with a web-based weather application; the method further comprising:
transmitting, by the API module, a geolocation of the SST to the web-based weather application;
receiving, by the API module, rain data comprising data indicative of a first likelihood of rain value from the web-based weather application; and
outputting, by the API module, the first likelihood of rain value as said at least one second output.

6. The method as claimed in claim 5, further comprising verifying the possible rain event by determining that the first likelihood of rain value is greater than a second predetermined threshold value; and/or
wherein the rain data further comprises data indicative of a rainfall volume value; the method further comprising:
classifying a severity of the possible rain event based on the rainfall volume value.

7. The method as claimed in any one of claims 2 to 6, wherein the at least one second rain event detection component comprises at least one pre-trained AI module configured to detect the possible rain event; the method further comprising:
providing sound data captured by at least one microphone of the SST as an input into the at least one pre-trained AI module; and
outputting, by the pre-trained AI module, at least one respective second likelihood of rain value as said at least one second output.

8. The method as claimed in claim 7, further comprising verifying the possible rain event by determining that at least one of the at least one respective second likelihood of rain value is greater than at least one respective third predetermined threshold value; and/or further comprising classifying a severity of the possible rain event based on a greatest of the at least one respective second likelihood of rain value.

9. The method as claimed in any preceding claim, further comprising responsive to said determining, changing, by the SST, at least one operational setting associated with at least one hardware component of the SST.

10. The method as claimed in claim 9, further comprising changing at least one operational setting of a card skimmer detector component located within the SST; and optionally further comprising disabling the card skimmer detector component.

11. The method as claimed in any preceding claim, further comprising transmitting, by the SST, an indication that the possible weather event is occurring in the environment to at least one further SST located within a predetermined distance of the SST; and/or
wherein the second weather event detection component is a communication module configured to communicate with at least one further SST located within a predetermined distance of the SST, the method further comprising:
receiving, by the SST, an indication that the possible weather event is occurring in the environment from the at least one further SST; and
verifying said possible weather event based on said indication.

12. The method as claimed in any preceding claim, further comprising:
prior to said detecting and said verifying, inputting the first output and the at least one second output into a central processing unit; and
responsive to said determining, outputting an indication that the weather event is occurring in the environment from the central processing unit.

13. A Self-Service Terminal (SST), comprising:
at least one processor configured to:
detect a possible weather event in an environment local to the SST based on a first output of a first weather event detection component of the SST;
verify said possible weather event based on at least one second output of at least one second weather event detection component of the SST; and
determine that the possible weather event is occurring in the environment local to the SST when the possible weather event is verified.

14. The Self-Service Terminal as claimed in claim 13, wherein the Self-Service Terminal is an Automated Teller Machine (ATM).

15. A computer program comprising instructions which, when executed by a computing device, cause the computing device to carry out the method defined by any of claims 1 to 12.
